# FASCICULE DE BREVET EUROPEEN

(11) **EP 3 795 878 B1**
(45) Date de publication et mention de la délivrance du brevet: **21.06.2023**
(21) Numéro de dépôt: 20196992.0
(22) Date de dépôt: 18.09.2020
(51) Int. Cl.: F16L 23/04, F16L 51/04, F16L 33/035

(54) **COLLIER DE SERRAGE**
KLEMMRING
CLAMPING COLLAR

(30) Priorité: 23.09.2019 FR 1910485
(43) Date de publication de la demande: 24.03.2021
(73) Titulaire: Caillau, 92130 Issy-les-Moulineaux (FR)
(72) Inventeur: RIGOLLET, Nicolas, 41200 ROMORANTIN (FR); PREVOT, Fabrice, 41130 SELLES-SUR-CHER (FR)
(74) Mandataire: Cabinet Beau de Loménie

(56) Documents cités:
- FR-A1- 2 651 854
- FR-A1- 2 777 970
- US-A- 5 437 081

## Description

L'exposé concerne un collier de serrage comprenant une ceinture métallique portant une oreille saillante au voisinage d'une première extrémité et un crochet au voisinage d'une deuxième extrémité.

Un tel collier de serrage sert à serrer un objet, par exemple un tuyau emmanché sur un embout, ou bien deux portions de tube raccordées entre elles en bout à bout ou par emmanchement.

Le collier de serrage peut être utilisé dans un environnement soumis à d'importantes variations de température, par exemple en extérieur ou dans le compartiment moteur d'un véhicule ou encore sur une ligne d'échappement du moteur d'un véhicule.

Des colliers de ce type sont connus par exemple par les demandes de brevet EP 2 480 355, EP 0 627 591, EP 1 352 192, FR 2 777 970 ou encore US 5 353 478. Pour le serrage d'un tel collier, il convient d'utiliser une pince ou analogue, dont une mâchoire est en prise avec une partie arrière du crochet et une autre mâchoire est en prise avec une partie arrière de l'oreille, de manière à rapprocher le crochet de l'oreille jusqu'à ce que son bord avant passe au-dessus de l'oreille et vienne s'accrocher derrière elle. Une fois le collier ainsi fermé du fait de cet accrochage, il doit serrer l'objet autour duquel il est disposé.

Lors de sa fermeture par accrochage, et également alors qu'il est fermé sur l'objet qu'il serre, le collier est soumis à d'importantes forces de tension. En particulier, l'objet serré par le collier peut se déformer, notamment du fait d'éventuelles dilations thermiques, ce qui peut provoquer des efforts de tension importants. Le collier doit pouvoir accompagner ces dilatations dans une certaine mesure, de façon à maintenir le serrage sans endommager l'objet serré. Ainsi, les déformations de l'objet serré par le collier peuvent provoquer une déformation locale du collier, et il importe que cette déformation soit réversible pour assurer le serrage du collier lorsque l'objet reprend ses dimensions initiales. Dans les colliers du type précité, le crochet présente une paroi avant destinée à être retenue derrière l'oreille lorsque le collier est fermé, et une partie courante formée par un pli ou un double pli arrière, et par une portion de sommet du crochet qui s'étend entre la partie arrière et la paroi avant.

Le pli arrière permet de ménager une surface de prise pour la mâchoire du crochet qui doit être en appui à l'arrière de ce dernier. Ainsi, lors du serrage, cette mâchoire pousse le crochet devant elle jusqu'à ce que la paroi avant du crochet vienne s'accrocher derrière l'oreille. Cependant, une fois le collier accroché, ce pli arrière peut subir des déformations. En particulier, si les efforts de tension deviennent très importants, ces déformations peuvent prendre un caractère plastique, c'est-à-dire qu'elles ne seraient pas réversibles, ce qui pose plusieurs problèmes. D'une part, la géométrie du crochet risque d'être modifiée de telle sorte que l'accrochage de la paroi avant derrière l'oreille est bien moins assuré. Ceci peut par exemple être dû au fait que la déformation du crochet modifie le positionnement de la paroi avant, en particulier sa hauteur radiale. D'autre part, une déformation du pli arrière du crochet se traduit en général par un "déroulement" de ce pli qui augmente la longueur du crochet. Si cette augmentation de longueur n'est pas réversible, le diamètre du collier est augmenté, et le serrage risque d'être moins bien assuré.

### Objet et résumé de l'exposé

L'exposé vise à remédier au moins en partie aux inconvénients précités, en proposant un collier de serrage qui puisse être aisément fermé par accrochage du crochet sur l'oreille et pour lequel, cet accrochage et le serrage qui en résulte soient maintenus. Plus particulièrement, l'exposé vise à proposer un collier dans lequel les risques de déformation plastique de la partie courante du crochet sont limités, voire évités.

Ainsi, l'exposé concerne un collier de serrage comprenant une ceinture métallique portant une oreille saillante au voisinage d'une première extrémité et un crochet au voisinage d'une deuxième extrémité, le crochet présentant une paroi avant et une partie courante qui s'étend vers l'arrière depuis cette paroi avant jusqu'à une zone de raccordement du crochet à la deuxième extrémité de la ceinture, la paroi avant étant destinée à être retenue derrière l'oreille alors que le crochet est accroché sur l'oreille pour maintenir le collier à l'état serré, la partie courante reliant la paroi avant à la ceinture et présentant une surface de prise en saillie radiale vers l'extérieur et deux bordures latérales qui s'étendent axialement de part et d'autre de la surface de prise en étant radialement en retrait par rapport à la surface de prise, les bordures latérales étant reliées à l'extrémité de la ceinture dans la continuité de cette dernière, sans pli radial vers l'extérieur et présentant, par rapport à un plan tangent à la surface circonférentielle externe de la ceinture dans la zone de rattachement du crochet à ladite surface circonférentielle, une inclinaison comprise entre 5° et 60°.

Ainsi, dans le collier selon le présent exposé, les bordures latérales radialement en retrait par rapport à la surface de prise s'étendent de part et d'autre de cette dernière. Ces bordures latérales se comportent comme des haubans qui s'opposent à une déformation de la partie du crochet dans laquelle est formée la surface de prise. Vis-à-vis du contour de la surface de prise, considéré comme un arc, les bordures latérales se comportent comme la corde de l'arc et empêchent donc sa déformation. D'une part, la surface de prise forme une prise effective utile pour l'outil de serrage du collier, par exemple pour la mâchoire d'une pince. D'autre part, les bordures latérales assurent l'intégrité de la forme du crochet et s'opposent donc à une déformation de ce dernier, en particulier une déformation plastique. Le crochet est donc aisément manoeuvré lors du serrage sans pour autant risquer de se déformer significativement après le serrage.

Optionnellement, la surface de prise s'étend sur une largeur comprise entre 20% et 70%, optionnellement entre 30% et 50%, de la largeur de la partie courante du crochet, lesdites largeurs étant mesurées axialement. Optionnellement, la surface de prise est formée à l'arrière d'un bossage de la partie courante.

Optionnellement, le bossage s'étend vers l'avant sensiblement jusqu'à la jonction entre la partie courante et la paroi avant.

Optionnellement, le bossage couvre une largeur comprise entre 20% et 70%, optionnellement entre 30% et 50% de la largeur de la partie courante du crochet, lesdites largeurs étant mesurées axialement. Optionnellement, la paroi avant présente au moins une nervure de rigidification.

Optionnellement, la au moins une nervure de rigidification est reliée à l'avant du bossage.

Optionnellement, les bordures latérales sont sensiblement planes.

Optionnellement, la ceinture présente un renfoncement annulaire interne, délimité par des joues orientées vers l'intérieur, et les bordures latérales sont au moins en partie formées dans des prolongements de ces joues, qui sont redressés pour être orientés axialement.

Optionnellement, les bordures latérales présentent, par rapport au plan tangent à la surface circonférentielle externe de la ceinture dans la zone de rattachement du crochet à ladite surface circonférentielle, une inclinaison comprise entre 10° et 40°.

Optionnellement, les bordures latérales s'étendent sur la totalité de la longueur de la partie courante, depuis la jonction du crochet avec la ceinture jusqu'à la paroi avant.

Optionnellement, la ceinture présente au moins une réserve de capacité, formée par une portion de la ceinture susceptible de s'allonger sous l'effet d'une tension de serrage de la ceinture, la réserve de capacité présentant optionnellement au moins une portion de bord concave, en particulier formée sur le bord d'un orifice déformable.

Optionnellement, la ceinture présente un renfoncement annulaire interne, délimité par des joues orientées vers l'axe de la ceinture, et la réserve de capacité présente des portions de joues, également orientées vers l'intérieur.

Optionnellement, la réserve de capacité est délimitée, selon la direction circonférentielle de la ceinture, par des portions formant charnières. Optionnellement, les portions formant charnières sont dépourvues de joues.

Optionnellement, le collier de serrage est formé en une seule pièce dans une bande de métal.

Le présent exposé sera bien compris et ses avantages apparaîtront mieux à la lecture de la description détaillée qui suit, d'un mode de réalisation représenté à titre d'exemple non limitatif.

### Brève description des dessins

[Fig. 1] La figure 1 est une vue de côté d'un collier selon le présent exposé à l'état ouvert.
[Fig. 2] La figure 2 est une vue en perspective du collier de la figure 1.
[Fig. 3] La figure 3 est une autre vue en perspective du collier de la figure 1, prise sous un autre angle.
[Fig. 4] La figure 4 est une vue de dessus, selon la flèche IV, du collier de la figure 1.
[Fig. 5] La figure 5 montre la zone Z de la figure 1, prise selon la flèche V indiquée sur la figure 1.
[Fig. 6] La figure 6 est une vue en coupe de la figure 5 dans le plan radial VI-VI.
[Fig. 7] La figure 7 illustre une possibilité pour la mise en place du collier autour d'un objet devant être serré à l'aide du collier.
[Fig. 8] La figure 8 montre en vue de côté le collier serré sur l'objet.
[Fig. 9] La figure 9 est une vue en coupe dans le plan IX-IX de la figure 8.

### Description détaillée de l'objet de l'exposé

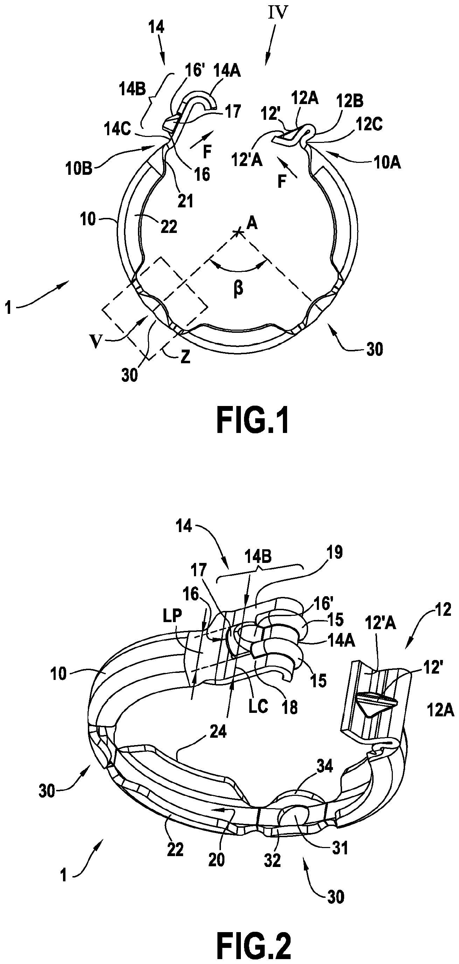

En référence à la figure 1, on voit que le collier de serrage 1 présente une ceinture 10 qui, à une première extrémité 10A, porte une oreille 12 et, à une deuxième extrémité 10B, porte un crochet 14. Le collier est ici représenté à l'état ouvert, le crochet n'étant pas accroché sur l'oreille et les extrémités 10A et 10B étant écartées. On comprend que lorsque le collier est fermé par accrochage du crochet sur l'oreille, la ceinture délimite une circonférence cylindrique centrée sur un axe A.

L'oreille 12 comprend en l'espèce un double pli 12A, 12B, faisant saillie radialement vers l'extérieur par rapport à la circonférence de la ceinture et rattaché à l'extrémité 10A de cette ceinture en 12C. La face externe du pli avant 12A présente une nervure de rigidification 12' qui s'étend en l'espèce jusque sur un prolongement 12'A de la première extrémité 10A situé vers l'avant au-delà de l'oreille.

Le crochet présente une paroi avant 14A et une partie courante 14B qui est rattachée à la deuxième extrémité 10B de la ceinture en 14C. La paroi avant 14A est pliée vers l'intérieur, c'est-à-dire vers l'axe A, de manière à être capable de s'accrocher derrière l'oreille 12 pour maintenir le collier à l'état serré.

Par convention, au sens du présent exposé, on qualifiera de "externe" un élément orienté à l'opposé de l'axe A et de "interne" un élément orienté vers l'axe A. Sachant que, pour fermer le collier, le crochet et l'oreille se déplacent l'un par rapport à l'autre dans le sens des flèches F indiquées sur la figure 1, un élément du crochet sera qualifié de "avant" lorsqu'il se trouve vers l'avant dans le sens de déplacement du crochet vers l'oreille pour le serrage du collier. Un élément du crochet sera qualifié de "arrière" lorsqu'il se trouve au contraire vers l'arrière dans le même sens de déplacement. De manière analogue, s'agissant de l'oreille, un élément sera qualifié de "avant" lorsqu'il est situé vers l'avant dans le sens du déplacement de l'oreille vers le crochet et de "arrière" lorsqu'il est situé vers l'arrière dans le même sens de déplacement.

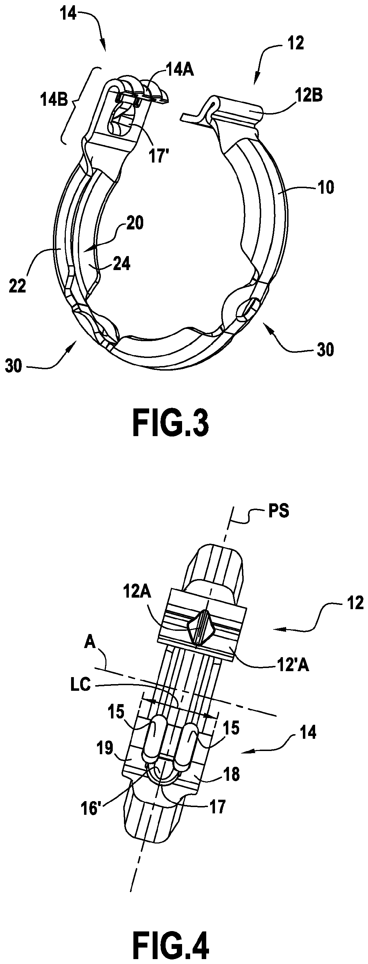

La partie courante 14B du crochet est située à l'arrière de la paroi avant 14A et s'étend vers l'arrière depuis cette paroi avant jusqu'à la zone de raccordement 14C du crochet à la deuxième extrémité 10B de la ceinture. Ainsi, la partie courante 14B relie la paroi avant 14A à la ceinture 10. Cette partie courante 14B présente une surface de prise 16 qui se trouve en saillie radiale vers l'extérieur. Plus précisément, en considérant la figure 2, on voit que deux bordures latérales, respectivement 18 et 19 sont situées axialement de part et d'autre de la surface de prise 16. Ici, « axialement » signifie dans une direction selon l'axe A de la ceinture. On voit que ces deux bordures latérales sont en retrait radialement par rapport à la surface de prise 16. En l'espèce, la surface de prise 16 est formée à l'arrière d'un bossage 17 que présente la partie courante 14B, ce bossage se traduisant par un renfoncement 17' sur la face interne de la partie courante 14B du crochet, ainsi que le montre la figure 3.

La surface arrière du bossage 17 est redressée radialement de manière abrupte en formant un angle significatif par rapport à la surface externe de la partie courante du crochet qui est située immédiatement à l'arrière de cette surface de prise, de manière à offrir une prise pour un outil de serrage, par exemple pour la mâchoire d'une pince. En revanche, la partie avant 16' du bossage est raccordée en pente plus douce à la surface externe de la partie courante du crochet qui est située à l'avant du bossage.

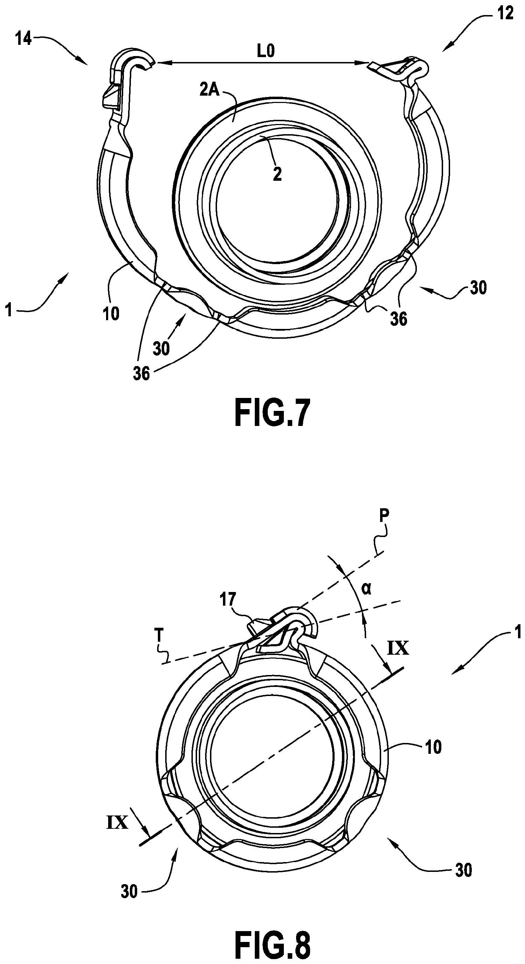

Alors que la surface de prise forme un ressaut abrupt par rapport aux surfaces environnantes, les bordures latérales de la partie courante du crochet sont reliées à l'extrémité 10B de la ceinture dans la continuité de cette dernière, sans pli radial vers l'extérieur. En l'occurrence, les bordures latérales sont sensiblement planes. Comme on le voit sur la figure 8, leurs surfaces externes définissent un plan P qui est incliné d'un angle α par rapport à un plan T tangent à la surface circonférentielle externe de la ceinture 10, à la deuxième extrémité 10B de cette dernière, dans la zone 14C de rattachement du crochet à la ceinture. L'angle α est compris entre 5° et 60°, optionnellement entre 10° et 40°. Par exemple, l'angle α peut être de l'ordre de 20°. Les plans P et T, ainsi que l'angle α précédemment cité sont représentés sur la figure 8, à l'état fermé du collier, alors que le crochet est accroché derrière l'oreille. Par convention, les valeurs indiquées ci-dessus pour l'angle α sont mesurées dans cette situation dans laquelle le collier est fermé. Les bordures latérales situées de part et d'autre de la surface de prise 16 s'opposent à la déformation de cette surface de prise. En l'espèce, ces bordures latérales s'opposent à la déformation du bossage 17 dans lequel la surface de prise 16 est formée. Cette surface de prise offrant un plan d'appui à l'outil de serrage, il est inutile de doter le crochet d'un pli dans la zone de raccordement 14C avec l'extrémité 10B de la ceinture. Comme indiqué précédemment, ce raccordement s'effectue dans la continuité de la surface circonférentielle de la ceinture.

La surface de prise s'étend sur une largeur LP (voir figure 2) qui est comprise entre 20% à 70%, optionnellement entre 30% et 50% de la largeur LC de la partie courante du crochet, ces largeurs étant mesurées axialement, c'est-à-dire selon la direction de l'axe A. Ainsi, les bordures latérales présentent chacune une largeur comprise entre 15% et 40% de la largeur LC, optionnellement entre 25% et 40% de cette largeur LC. Par exemple, la largeur de la partie courante du crochet est divisée en trois tiers égaux ou sensiblement égaux, respectivement occupés par une bordure latérale, la surface de prise et l'autre bordure latérale. En l'espèce, la largeur LP de la surface de prise est également la largeur du bossage 17. Ces bordures latérales forment des zones de la partie courante du crochet ayant suffisamment de matière pour présenter la résistance mécanique requise. Le bossage 17, qui présente des dimensions réduites, forme une zone fortement écrouie, peu sujette à déformation.

En l'espèce, le collier est symétrique par rapport à un plan de symétrie PS perpendiculaire à l'axe A, ainsi qu'on le voit sur la figure 4. La surface de prise 16 est située dans une région centrale de la largeur LC de la partie courante 14B du crochet, cette largeur étant mesurée parallèlement à l'axe A. On voit sur les figures que le bossage 17 s'étend vers l'avant du crochet sensiblement jusqu'à la jonction entre la partie courante 14B et la paroi avant 14A.

En l'espèce, la paroi avant 14 du crochet présente au moins une nervure de rigidification 15. En l'espèce, cette paroi avant présente deux nervures de rigidification 15 situées de part et d'autre du plan de symétrie PS. On voit que les nervures de rigidification 15 sont reliées à l'avant du bossage 17. En effet, la partie avant 16' de la surface externe du bossage vient naturellement se rattacher aux nervures 15. On constitue ainsi des zones d'écrouissage dans le crochet qui s'opposent à sa déformation. Le bossage 17 peut présenter une largeur relativement réduite, ainsi qu'il a été indiqué, et constitue donc une zone fortement écrouie peu sujette à la déformation. La présence des bordures latérales de part et d'autre du bossage vient renforcer la résistance de la partie courante du crochet à la déformation. Les nervures 15 s'étendent en l'espèce non seulement sur la paroi avant en constituant ainsi des zones fortement écrouies s'opposant à la déformation de cette paroi, mais également jusqu'au bossage en s'opposant ainsi à une déformation de la pliure entre la paroi avant et la partie courante du crochet. Le crochet est ainsi particulièrement robuste. Selon les applications, les nervures 15 pourraient ne pas être présentes, et la surface de prise être réalisée sur un élément autre qu'un bossage, par exemple par une languette redressée par rapport à la surface de la partie courante. En effet, la surface de prise en tant que telle est sollicitée uniquement lors de l'opération de serrage du collier, lorsqu'elle coopère avec l'outil de serrage. Si cette surface de prise doit pouvoir présenter une résistance mécanique suffisante pour permettre la fermeture et le serrage du collier, il n'est pas nécessaire que cette résistance soit pérenne. En revanche, les bordures latérales assurent sur le long terme une résistance mécanique de la partie courante du crochet s'opposant à l'allongement de ce dernier pendant toute la durée de maintien du serrage sur l'objet serré à l'aide du collier.

On a évoqué plus haut le prolongement 12'A de la première extrémité 10A de la ceinture. Selon les applications, ce prolongement pourrait s'étendre sur une longueur plus grande que ce qui est représenté, par exemple sur une longueur analogue à celle de la partie courante 14B du crochet de manière à ponter cette dernière à l'intérieur du crochet pour assurer un appui continu de la ceinture du collier sur l'objet serré, même sous le crochet. En variante, il est possible de rapporter une semelle sous le crochet, ou de réaliser le crochet dans une bande fixée sur la deuxième extrémité de la ceinture, comme illustré dans la demande de brevet européen EP 1 352 192 pour assurer un tel appui continu.

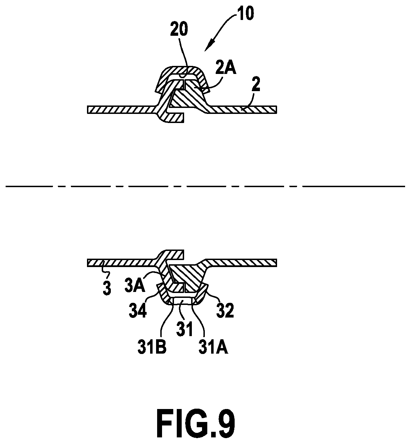

La ceinture du collier pourrait être plate, c'est-à-dire correspondre à la paroi d'un cylindre. Cependant, en l'espèce, cette ceinture présente un renfoncement annulaire interne 20. Par exemple, comme le montre la figure 9, le collier peut servir à raccorder entre elles deux parties 2 et 3 d'un objet présentant des saillies annulaires 2A et 3A à leurs extrémités. Il s'agit par exemple de deux portions de tubes 2, 3 dont les extrémités, pourvues des saillies annulaires, sont amenées l'une contre l'autre de sorte que leurs saillies annulaires peuvent être reçues dans le renfoncement 20 de la ceinture du collier.

Le renfoncement interne 20 est délimité par des joues respectivement 22 et 24 qui sont orientées vers l'intérieur, c'est-à-dire vers l'axe A de la ceinture. Ces joues forment les limites axiales du renfoncement annulaire 20 ; elles sont rabattues vers l'axe A du collier par rapport à la périphérie externe de la ceinture.

Le renfoncement présente en l'espèce une forme sensiblement en U, avec un fond plat 23, qui délimite une surface cylindrique et par rapport auquel les joues 22 et 24 sont rabattues. Le renfoncement pourrait cependant présenter une forme en V. On peut prévoir, comme dans l'exemple représenté, que le renfoncement ait globalement une forme en U, mais que les joues, formant les branches du U, soient inclinées par rapport à un plan radial perpendiculaire à l'axe A, de manière à aller en s'éloignant l'une de l'autre à mesure qu'elles se rapprochent de l'axe A. Ainsi, le serrage du collier sur les portions d'objet 2, 3, tend à rapprocher l'une de l'autre les saillies annulaires 2A et 3A.

On voit notamment sur la figure 2 que les bordures latérales 18 et 19 sont au moins en partie formées dans des prolongements des joues 20 et 22, respectivement, qui sont redressés de manière à être orientés selon l'axe A. Ainsi, dans la zone 14C de raccordement de partie arrière du crochet à l'extrémité 10B de la ceinture, les joues 20 et 22 sont déformées pour être ramenées parallèlement à l'axe A. Ces déformations constituent des zones de pliage en torsion 21 dans lesquelles le matériau de la bande est fortement écroui. Elles contribuent également à la résistance mécanique de la partie courante du crochet.

On voit que les bordures latérales 18 et 19 s'étendent sur la totalité de la longueur de la partie courante 14B, depuis la jonction du crochet avec la ceinture 10 dans la zone arrière 14C, jusqu'à la paroi avant 14A.

En l'espèce, la ceinture 10 présente au moins une réserve de capacité 30 formée par une portion de cette ceinture qui est susceptible de s'allonger lorsque la tension de serrage de la ceinture dépasse une valeur seuil. En l'espèce, deux réserves de capacité 30 sont prévues dans deux zones distinctes de la ceinture. Par exemple, ces réserves de capacité sont espacées angulairement d'un angle β de l'ordre de 50 à 180°, par exemple de l'ordre de 90°.

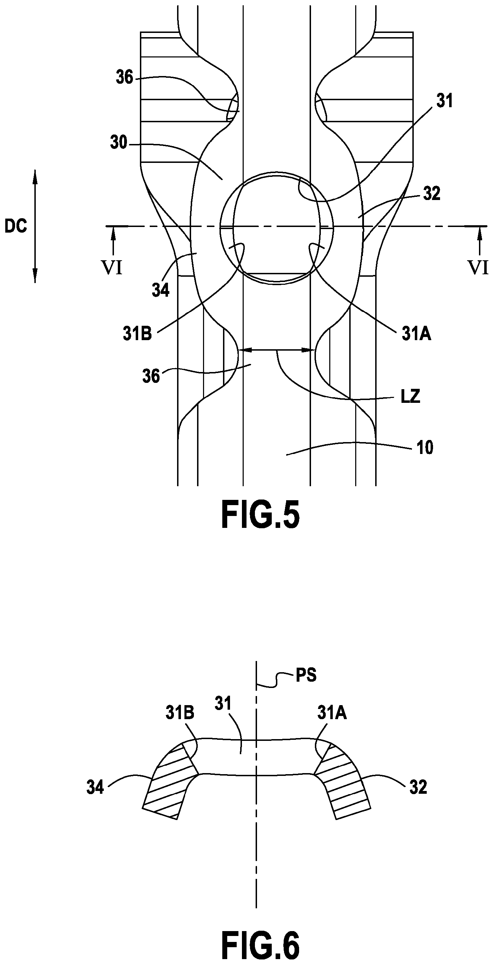

En l'espèce, on voit en particulier en référence à la figure 5 que la réserve de capacité 30 (les deux réserves étant ici identiques) présente un orifice déformable 31. Sous l'effet d'une tension de serrage élevée, cet orifice 31 peut se déformer dans le sens de sa longueur, c'est-à-dire s'agrandir selon la direction circonférentielle DC de la ceinture 10. Les bords 31A et 31B de cet orifice qui sont opposés selon la direction de l'axe A, forment des portions de bord concaves qui peuvent se déformer par une diminution de leur courbure (c'est-à-dire une augmentation de leur rayon de courbure) lorsque la tension de serrage dépasse la valeur seuil, de sorte que la réserve de capacité s'allonge selon la circonférence de la ceinture. On voit que les réserves de capacité 30 présentent des portions de joues, respectivement 32 et 34, qui sont également orientées vers l'intérieur, c'est-à-dire vers l'axe A. Ces portions de joues contribuent par leurs géométries et leurs dimensions à permettre que les déformations de l'orifice 31 restent dans les limites requises. En particulier, en l'espèce, l'orientation de ces portions de joues vers l'axe A rend relativement difficiles leurs déformations selon la direction circonférentielle de la ceinture. L'amplitude de déformation de la réserve de capacité est donc faible. Comme on le voit sur la figure 6, les bords 31A et 31B de l'orifice 31 qui sont opposés selon la direction de l'axe A sont inclinés par rapport à un plan perpendiculaire à cet axe A, par exemple par rapport au plan de symétrie PS précédemment évoqué. En l'espèce, ceci est réalisé par le fait que les portions de joues 32 et 34 empiètent localement sur ces bords de l'orifice 31. Cette inclinaison contribue au fait que, sous l'effet des tensions pour lesquelles est dimensionné le collier, la limite de déformation plastique de la réserve de capacité n'est normalement pas atteinte.

On voit en l'espèce que la réserve de la capacité 30 est délimitée selon la direction circonférentielle de la ceinture par des portions formant charnières 36. En particulier, ces portions formant charnières sont dépourvues de joues. En d'autres termes, les joues 20 et 22 de la ceinture sont interrompues dans ces portions formant charnières, qui présentent donc une quantité de matériau moindre et une largeur LZ (voir figure 5) inférieure à celle de la ceinture. Comme on le voit sur la figure 7, la présence de ces portions formant charnières, qui sont en l'espèce au nombre de 4 puisqu'il y a deux réserves de capacité 30, permet d'ouvrir le collier largement pour favoriser sa mise en place autour de l'objet 2, 3 qu'il doit serrer par un déplacement relatif radial entre le collier et cet objet. En d'autres termes, sur la figure 7, la largeur LO de l'ouverture dégagée entre le crochet et l'oreille est ici supérieure aux dimensions radiales de l'objet 2, 3 et le collier peut donc être amené latéralement autour de cet objet. Cependant, cette ouverture maximale ne nuit pas à l'intégrité et à la résistance mécanique du collier puisqu'elle est due à des déformations de ce dernier dans les portions formant charnières. Par ailleurs, la quantité de matériau dans ces portions formant charnières reste suffisante pour qu'elles ne soient pas aisément déformables dans le sens de la direction circonférentielle de la ceinture.

On relève que les zones de la réserve de capacité qui bordent le trou 31 restent dans la géométrie générale de la ceinture. En effet, les portions de bords concaves, en l'espèce formées par les bords du trou 31, se trouvent sensiblement dans la continuité des surfaces de révolution internes du renfoncement (fond cylindrique du renfoncement et faces internes annulaires des joues), ce qui permet une continuité d'appui de la ceinture du collier sur l'objet serré, même dans la région de la réserve de capacité. Le trou n'interrompt que très localement cette continuité d'appui et cette interruption est neutralisée par les surfaces internes qui bordent le trou. On peut prévoir que les portions de joues 32 et 34 aient une inclinaison initiale, par rapport à un plan radial perpendiculaire à l'axe A, tel que le plan PS, qui soit légèrement différente de l'inclinaison des joues 22 et 24 par rapport au même plan. Par exemple, les portions de joues 32 et 34 pourraient être rabattues légèrement davantage vers l'axe A que les joues 22 et 24, de manière à mettre la réserve de capacité sous précontrainte lors du serrage.

Dans l'exemple qui vient d'être décrit, le collier est réalisé en une seule pièce dans une bande de métal.

## Revendications

1. Collier de serrage comprenant une ceinture (10) métallique portant une oreille saillante (12) au voisinage d'une première extrémité (10A) et un crochet (14) au voisinage d'une deuxième extrémité (10B), dans lequel le crochet présente une paroi avant (14A) et une partie courante (14B) qui s'étend vers l'arrière depuis cette paroi avant jusqu'à une zone de raccordement (14C) du crochet à la deuxième extrémité (10B) de la ceinture, la paroi avant (14A) étant destinée à être retenue derrière l'oreille alors que le crochet (14) est accroché sur l'oreille (12) pour maintenir le collier à l'état serré, la partie courante (14B) reliant la paroi avant à la ceinture et présentant une surface de prise (16) en saillie radiale vers l'extérieur et deux bordures latérales (18, 19) qui s'étendent axialement de part et d'autre de la surface de prise en étant radialement en retrait par rapport à la surface de prise, les bordures latérales (18,19) étant reliées à l'extrémité (10B) de la ceinture dans la continuité de cette dernière, **caractérisé en ce que** les bordures latérales (18,19) sont reliées à l'extrémité (10B) de la ceinture dans la continuité de cette dernière, sans pli radial vers l'extérieur et présentent, par rapport à un plan (T) tangent à la surface circonférentielle externe de la ceinture (10) dans la zone (14C) de rattachement du crochet (14) à ladite surface circonférentielle, une inclinaison comprise entre 5° et 60°.

2. Collier de serrage selon la revendication 1, dans lequel la surface de prise (16) s'étend sur une largeur (LP) comprise entre 20 % et 70 %, optionnellement entre 30 % et 50 %, de la largeur (LC) de la partie courante (14B) du crochet (14), lesdites largeurs étant mesurées axialement.

3. Collier de serrage selon la revendication 1 ou 2, dans lequel la surface de prise (16) est formée à l'arrière d'un bossage (17) de la partie courante (14B).

4. Collier de serrage selon la revendication 3, dans lequel le bossage (17) s'étend vers l'avant sensiblement jusqu'à la jonction entre la partie courante (14B) et la paroi avant (14A).

5. Collier de serrage selon l'une des revendications 3 et 4, dans lequel le bossage (17) couvre une largeur (LP) comprise entre 20 % et 70 %, optionnellement entre 30 % et 50 % de la largeur (LC) de la partie courante (14B) du crochet (14), lesdites largeurs étant mesurées axialement.

6. Collier selon l'une des revendications 1 à 5, dans lequel la paroi avant (14A) présente au moins une nervure de rigidification (15).

7. Collier selon la revendication 6, prise en combinaison avec l'une des revendications 3 à 5, dans lequel la au moins une nervure de rigidification (15) est reliée à l'avant du bossage (17).

8. Collier de serrage selon l'une des revendications 1 à 7, dans lequel les bordures latérales (18, 19) sont sensiblement planes.

9. Collier de serrage selon l'une des revendications 1 à 8, dans lequel la ceinture (10) présente un renfoncement annulaire interne (20), délimité par des joues (22, 24) orientées vers l'intérieur, et les bordures latérales (18, 19) sont au moins en partie formées dans des prolongements de ces joues, qui sont redressés pour être orientés axialement.

10. Collier de serrage selon l'une des revendications 1 à 9, dans lequel les bordures latérales (18, 19) présentent, par rapport au plan (T) tangent à la surface circonférentielle externe de la ceinture (10) dans la zone (14C) de rattachement du crochet (14) à ladite surface circonférentielle, une inclinaison comprise entre 10° et 40°.

11. Collier de serrage selon l'une des revendications 1 à 10, dans lequel les bordures latérales (18, 19) s'étendent sur la totalité de la longueur de la partie courante (14B), depuis la jonction du crochet (14) avec la ceinture (10) jusqu'à la paroi avant (14A).

12. Collier de serrage selon l'une des revendications 1 à 11, dans lequel la ceinture (10) présente au moins une réserve de capacité (30), formée par une portion de la ceinture susceptible de s'allonger sous l'effet d'une tension de serrage de la ceinture, la réserve de capacité (30) présentant optionnellement au moins une portion de bord concave, en particulier formée sur le bord d'un orifice (31) déformable.

13. Collier de serrage selon la revendication 12, dans lequel la ceinture présente un renfoncement annulaire (20) interne, délimité par des joues (22, 24) orientées vers l'axe A de la ceinture, et la réserve de capacité (30) présente des portions de joues (32, 34), également orientées vers l'intérieur.

14. Collier de serrage selon l'une des revendications 12 et 13, dans lequel la réserve de capacité (30) est délimitée, selon la direction circonférentielle de la ceinture (10), par des portions formant charnières (36).

15. Collier de serrage selon la revendication 14, prise en combinaison avec la revendication 13, dans lequel les portions formant charnières (36) sont dépourvues de joues.

16. Collier de serrage selon l'une des revendications 1 à 15, formé en une seule pièce dans une bande de métal.

## Patentansprüche

1. Klemmring, der einen Metallgürtel (10) umfasst, der eine hervorstehende Öse (12) in der Nachbarschaft eines ersten Endes (10A) und einen Haken (14) in der Nachbarschaft eines zweiten Endes (10B) trägt, wobei der Haken eine Vorderwand (14A) und einen laufenden Teil (14B) aufweist, der sich von dieser Vorderwand bis zu einer Anschlusszone (14C) des Hakens an dem zweiten Ende (10B) des Gürtels nach hinten erstreckt, wobei die Vorderwand (14A) dazu bestimmt ist, hinter der Öse zurückgehalten zu werden, während der Haken (14) an der Öse (12) eingehakt ist, um den Ring im gespannten Zustand zu halten, der laufende Teil (14B) die Vorderwand mit dem Gürtel verbindet und eine radial nach außen hervorstehende Eingriffsoberfläche (16) und zwei seitliche Ränder (18, 19) aufweist, die sich axial auf beiden Seiten der Eingriffsoberfläche erstrecken und dabei in Bezug auf die Eingriffsoberfläche radial vertieft sind, wobei die seitlichen Ränder (18, 19) mit dem Ende (10B) des Gürtels in der Fortsetzung dieses letzteren verbunden sind, **dadurch gekennzeichnet, dass** die seitlichen Ränder (18, 19) mit dem Ende (10B) des Gürtels in der Fortsetzung dieses letzteren ohne radiale Falz nach außen verbunden sind und in Bezug auf eine Ebene (T) tangential zur äußeren Umfangsoberfläche des Gürtels (10) in der Befestigungszone (14C) des Hakens (14) an der Umfangsoberfläche eine Neigung von zwischen 5° und 60° aufweisen.

2. Klemmring nach Anspruch 1, wobei die Eingriffsoberfläche (16) sich über eine Breite (LP) von zwischen 20 % und 70 %, wahlweise zwischen 30 % und 50 %, der Breite (LC) des laufenden Teils (14B) des Hakens (14) erstreckt, wobei die Breiten axial gemessen werden.

3. Klemmring nach Anspruch 1 oder 2, wobei die Eingriffsoberfläche (16) hinter einer Erhebung (17) des laufenden Teils (14B) gebildet ist.

4. Klemmring nach Anspruch 3, wobei die Erhebung (17) sich im Wesentlichen bis zu dem Übergang zwischen dem laufenden Teil (14B) und der Vorderwand (14A) nach vorne erstreckt.

5. Klemmring nach einem der Ansprüche 3 und 4, wobei die Erhebung (17) eine Breite (LP) abdeckt, die zwischen 20 % und 70 %, wahlweise zwischen 30 % und 50 %, der Breite (LC) des laufenden Teils (14B) des Hakens (14) beträgt, wobei die Breiten axial gemessen werden.

6. Ring nach einem der Ansprüche 1 bis 5, wobei die Vorderwand (14A) mindestens eine Versteifungsrippe (15) aufweist.

7. Ring nach Anspruch 6 in Kombination mit einem der Ansprüche 3 bis 5, wobei die mindestens eine Versteifungsrippe (15) mit dem vorderen Teil der Erhebung (17) verbunden ist.

8. Klemmring nach einem der Ansprüche 1 bis 7, wobei die seitlichen Ränder (18, 19) im Wesentlichen eben sind.

9. Klemmring nach einem der Ansprüche 1 bis 8, wobei der Gürtel (10) eine innere ringförmige Vertiefung (20) aufweist, die durch Seitenteile (22, 24) abgegrenzt ist, die nach innen ausgerichtet sind, und die seitlichen Ränder (18, 19) zumindest teilweise in Verlängerungen dieser Seitenteile gebildet sind, die aufgerichtet sind, um axial ausgerichtet zu sein.

10. Klemmring nach einem der Ansprüche 1 bis 9, wobei die seitlichen Ränder (18, 19) in Bezug auf die Ebene (T) tangential zur äußeren Umfangsoberfläche des Gürtels (10) in der Anschlusszone (14C) des Hakens (14) an der Umfangsoberfläche eine Neigung von zwischen 10° und 40° aufweisen.

11. Klemmring nach einem der Ansprüche 1 bis 10, wobei die seitlichen Ränder (18, 19) sich über die Gesamtheit der Länge des laufenden Teils (14B) ausgehend vom Übergang des Hakens (14) zu dem Gürtel (10) bis zu der Vorderwand (14A) erstrecken.

12. Klemmring nach einem der Ansprüche 1 bis 11, wobei der Gürtel (10) mindestens eine Umfangsreserve (30) aufweist, die durch einen Abschnitt des Gürtels gebildet ist, der sich unter der Wirkung einer Spannkraft des Gürtels ausdehnen kann, wobei die Umfangsreserve (30) wahlweise mindestens einen konkaven Randabschnitt aufweist, der insbesondere auf dem Rand einer verformbaren Öffnung (31) gebildet ist.

13. Klemmring nach Anspruch 12, wobei der Gürtel eine innere ringförmige Vertiefung (20) aufweist, die von Seitenteilen (22, 24) abgegrenzt ist, die hin zu der Achse A des Gürtels ausgerichtet sind, und die Umfangsreserve (30) Seitenteilabschnitte (32, 34) aufweist, die auch nach innen ausgerichtet sind.

14. Klemmring nach einem der Ansprüche 12 und 13, wobei die Umfangsreserve (30) entlang der Umfangsrichtung des Gürtels (10) durch Abschnitte abgegrenzt ist, die Scharniere (36) bilden.

15. Klemmring nach Anspruch 14 in Kombination mit Anspruch 13, wobei die Abschnitte, die Scharniere (36) bilden, keine Seitenteile aufweisen.

16. Klemmring nach einem der Ansprüche 1 bis 15, der einteilig in einem Metallband gebildet ist.

## Claims

1. A clamping collar comprising a metal belt (10) carrying a protruding lug (12) in the vicinity of a first end (10A) and a hook (14) in the vicinity of a second end (10B), **characterized in that** the hook has a front wall (14A) and a common part (14B) which extends rearwardly from this front wall up to an area of connection (14C) of the hook to the second end (10B) of the belt, the front wall (14A) being intended to be retained behind the lug while the hook (14) is hooked on the lug (12) to keep the collar in the clamped state, the common part (14B) linking the front wall to the belt and having a gripping surface (16) protruding radially outwardly and two lateral borders (18, 19) which extend axially on either side of the gripping surface by being radially set back from the gripping surface, the lateral borders (18, 19) being linked to the end (10B) of the belt in the continuity of the latter, **characterized in that** the lateral borders (18, 19) are linked to the end (10B) of the belt in the continuity of the latter without a radial fold outwardly and having, with respect to a plane (T) tangent to the outer circumferential surface of the belt (10) in the area (14C) of attachment of the hook (14) to said circumferential surface, an inclination comprised between 5° and 60°.

2. The clamping collar according to claim 1, wherein the gripping surface (16) extends over a width (LP) comprised between 20% and 70%, optionally between 30% and 50% of the width (LC) of the common part (14B) of the hook (14), said widths being measured axially.

3. The clamping collar according to claim 1 or 2, wherein the gripping surface (16) is formed at the rear of a boss (17) of the common part (14B).

4. The clamping collar according to claim 3, wherein the boss (17) extends forwardly substantially up to the junction between the common part (14B) and the front wall (14A).

5. The clamping collar according to any of claims 3 and 4, wherein the boss (17) covers a width (LP) comprised between 20% and 70%, optionally between 30% and 50% of the width (LC) of the common part (14B) of the hook (14), said widths being measured axially.

6. The clamping collar according to any of claims 1 to 5, wherein the front wall (14A) has at least one stiffening rib (15).

7. The clamping collar according to claim 6, taken in combination with any of claims 3 to 5, wherein the at least one stiffening rib (15) is linked to the front of the boss (17).

8. The clamping collar according to any of claims 1 to 7, wherein the lateral borders (18, 19) are substantially planar.

9. The clamping collar according to any of claims 1 to 8, wherein the belt (10) has an inner annular recess (20), delimited by cheeks (22, 24) oriented inwardly, and the lateral borders (18, 19) are at least partly formed in extensions of these cheeks, which are straightened to be oriented axially.

10. The clamping collar according to any of claims 1 to 9 wherein the lateral borders (18, 19) have, with respect to the plane (T) tangent to the outer circumferential surface of the belt (10) in the area (14C) of attachment of the hook (14) to said circumferential surface, an inclination comprised between 10° and 40°.

11. The clamping collar according to any of claims 1 to 10, wherein the lateral borders (18, 19) extend over the entire length of the common part (14B), from the junction of the hook (14) with the belt (10) up to the front wall (14A).

12. The clamping collar according to any of claims 1 to 11, wherein the belt (10) has at least one capacity reserve (30), formed by a portion of the belt likely to elongate under the effect of a clamping tension of the belt, the capacity reserve (30) optionally having at least one concave edge portion, particularly formed on the edge of a deformable orifice (31).

13. The clamping collar according to claim 12, wherein the belt has an inner annular recess (20), delimited by cheeks (22, 24) oriented towards the axis A of the belt, and the capacity reserve (30) has cheek portions (32, 34), also oriented inwardly.

14. The clamping collar according to any of claims 12 and 13, wherein the capacity reserve (30) is delimited, along the circumferential direction of the belt (10), by hinge-forming portions (36).

15. The clamping collar according to claim 14, taken in combination with claim 13, wherein the hinge-forming portions (36) are devoid of cheeks.

16. The clamping collar according to any of claims 1 to 15, formed in one piece from a metal strip.
